# EUROPÄISCHE PATENTSCHRIFT

(11) **EP 1 799 469 B1**
(45) Veröffentlichungstag und Bekanntmachung des Hinweises auf die Patenterteilung: **23.01.2008**
(21) Anmeldenummer: 04765711.9
(22) Anmeldetag: 30.09.2004
(51) Int. Cl.: B60C 7/24

(54) **FAHRZEUGRAD MIT EINER FELGE UND EINEM VOLLGUMMIREIFEN**
VEHICLE WHEEL COMPRISING A WHEEL RIM AND A RUBBER TYRE
ROUE DE VEHICULE COMPORTANT UNE JANTE ET UN PNEU PLEIN

(43) Veröffentlichungstag der Anmeldung: 27.06.2007
(73) Patentinhaber: Continental Aktiengesellschaft, 30165 Hannover (DE)
(72) Erfinder: SAUERWALD, H., Jürgen, 59955 Winterberg (DE); SCHOLZ, Klaus, 34497 Korbach (DE)
(74) Vertreter: Finger, Karsten
(86) Internationale Anmeldenummer: PCT/EP2004/010927
(87) Internationale Veröffentlichungsnummer: WO 2006/037353

(56) Entgegenhaltungen:
- EP-A- 1 312 489
- DE-C- 190 743
- GB-A- 191 407 250

## Beschreibung

Die Erfindung betrifft ein Fahrzeugrad mit einer Felge und mit einem auf der Felge positionierten Vollgummireifen gemäß dem Oberbegriff des Patentanspruchs 1.

Ein derartiges Fahrzeugrad ist aus der EP 1 312 489 A2 bekannt. Wesentlich bei einem derartigen Fahrzeugrad ist, dass auf die Felge ein aus Segmenten zusammengesetztes, am äußeren Umfang eine Keilfläche aufweisende ringförmige Unterschale angeordnet ist, die gegen eine eine gegengleich ausgeführte Keilfläche aufweisende ringförmige Oberschale, die mit dem Vollgummireifen fest verbunden ist, verspannt ist.

Der Vorteil eines derartigen Fahrzeugrades ist, dass der Vollgummireifen, welcher auf der Oberschale fest angeordnet ist, mit einfachsten Mitteln auf die Unterschale und damit auf die Felge aufgezogen werden kann. Zum Aufziehen eines derartigen Reifens auf eine Felge genügt ein einfacher Drehmomentschlüssel, während sonst bei allen bekannten Vollgummireifen für Industriezwecke schwerste Pressen zum Einsatz kommen, um den Vollgummireifen direkt auf die Felge zu pressen. Geeignete Pressen zum Aufpressen von Vollgummireifen auf die Felgen sind aber schwer und teuer und nicht überall verfügbar, so dass es schwierig ist, im Bedarfsfalle einen neuen Vollgummireifen auf eine Felge aufziehen zu lassen, da oftmals weite Wege bis zu einer mit einer derartigen Presse ausgerüsteten Werkstatt in Kauf genommen werden müssen.

Eine aus der EP 1 312 489 A2 bekannte Konstruktion kann bereits diese Nachteile überwinden, da durch die Konstruktion von segmentierter Unterschale und einteiliger Oberschale mit darauf anvulkanisiertem Reifen eine einfachste Montage möglich ist, die praktisch überall durchgeführt werden kann.

Gleichwohl haben sich bei einer Konstruktion gemäß EP 1 312 489 A2 gewisse Nachteile gezeigt, welche durch die Erfindung ausgeräumt werden sollen.

Als besonders problematisch hat sich der Einfluss von Wärme auf die Konstruktion von Unter-/Oberschale gezeigt, insofern, als dass beispielsweise bei hohen Temperaturen in Folge äußerer oder innerer Temperaturerhöhung die Oberschale zu Wärmeausdehnungen neigt, wodurch ein Reibschluss zwischen Ober- und Unterschale nicht in allen Fällen gewährleistet ist. Der Vollgummireifen fängt dann an, sich auf der Felge bzw. auf der Unterschale zu drehen.

Dieses Problem wird auf überraschend einfache Art und Weise mit einem Fahrzeugreifen gemäß dem Patentanspruch 1 gelöst. Erfindungsgemäß ist vorgesehen, ein aus der EP 1 312 489 A2 bekanntes Fahrzeugrad derart auszugestalten, dass die Oberschale aus wenigstens zwei Segmenten zusammengesetzt ist.

Es hat sich überraschenderweise gezeigt, dass insbesondere das Problem der Wärmeausdehnung sich dadurch lösen lässt, dass die Oberschale, ebenso wie die Unterschale, aus Segmenten besteht, und zwar wenigstens aus zwei Segmenten, vorzugsweise aus drei bis fünf Segmenten. Hierdurch ist es möglich, die thermischen Probleme in den Griff zu bekommen, insbesondere dadurch, dass die Segmente der Oberschale so zusammengesetzt werden, dass zwischen den Segmenten Dehnfugen verbleiben, welche in der Lage sind, Wärmedehnungen auszugleichen.

Es hat sich herausgestellt, dass die Ausgestaltung der Oberschale als segmentierte Oberschale weitere konstruktive Vorteile und Ausgestaltungsmöglichkeiten mit sich bringt. Beispielsweise ist es möglich, die segmentierte Oberschale und die segmentierte Unterschale formschlüssig zu verbinden, und zwar bevorzugterweise durch eine Ausgestaltung der radialen kongruenten Konturen von Oberschale und Unterschale durch ein Polygon oder durch eine Verzahnung.

Da die Reibflächen der Keilschalen (Ober- Unterschale) wegen einfacher Montage und Demontage geringste Reibwerte aufweisen sollen, bzgl der Umfangskräfte beim Bremsen u. Beschleunigen aber hohe Kräfte übertragen müssen, ist ein Formschluss dieses Systemes besonders vorteilhaft. Der Formschluß wird durch x-fach Polygone , eine Verzahnung, ein Nut- Feder - System, oder durch ein Bajonett-Verschluß erreicht.

Eine Ausgestaltung der Oberschale in segmentierter Form bietet ferner der Vorteil, diese mit einer axialen Verriegelung, beispielsweise in Nut- und Federform, und einer radialen Verriegelung zu versehen, was insbesondere den Vorteil hat, dass ein unsachgemäßes Anziehen der Verschraubung nicht zu einem Abriss des auf der Oberschale angeordneten Gürtels des Vollgummireifens führt.

Zweckmäßig kann es ferner sein, die radial äußere Kontur der Oberschale axial außen mit einer balligen Schulter zu versehen, so dass die radial äußere Kontur der Oberschale insgesamt die Form eines Sattels aufweist. Eine derartige Ausgestaltung hat sich als vorteilhaft erwiesen, da diese den bei hohen Achsauflasten auftretenden Spannungsrisse im Fußbereich des Vollgummireifens entgegenwirkt.

In praktischen Ausgestaltungen der Erfindung kann ferner vorgesehen sein, Oberschale und Unterschale mit gegengleichen Absätzen zu versehen. Diese Absätze dienen als definierter Anschlag, so dass die Schraubverbindung von Ober- und Unterschale nur bis zu einem definierten Punkt angezogen werden kann, was bei rein konischen Flächen gemäß der EP 1 312 489 A2 nicht der Fall war. Alternativ kann auch vorgesehen sein, die Schrauben jeweils in einer oder zwei Distanzhülsen zu führen, welche ebenfalls den Zweck eines definierten Anschlages haben. Andere bekannte Anschlagmöglichkeiten sind ebenfalls denkbar.

Um die Montage von Ober- und Unterschale so einfach wie nur möglich zu gestalten, kann es vorgesehen sein, die Segmente jeweils der Unterschale und der Oberschale an ihren Stirnkanten mit einer Rastverbindung oder auch Klicksystem zu versehen. Hierbei kann beispielsweise eine Stirnkante mit einem hakenartigen Zapfen versehen sein, der in eine entsprechende Ausnehmung in einer Stirnfläche eines anderen Segmentes eingreift und dort einrastet. Hierbei wird die Montage der Unterschalen auf die Felge denkbar einfach gemacht, in dem einfach die Segmente auf das Kompressionsgummi der Felge aufgelegt und mit den weiteren Segmenten durch die Rastverbindung verbunden, so dass ein umständliches und langwieriges Hantieren vermieden wird.

In einer weiteren praktischen Ausgestaltung kann vorgesehen sein, Druckkörper aus einem metallischen Material in die Segmente der Oberschale bzw. Unterschale einzubauen, welche einerseits den Flächendruck reduzieren, andererseits einen Anfahrschutz für die vorzugsweise aus Kunststoff bestehenden Segmente sowie die Schraubenköpfe bieten.

In einer weiteren vorteilhaften Ausgestaltung der Erfindung kann vorgesehen sein, den Fahrzeugreifen antistatisch auszurüsten. Denn insbesondere wenn Ober- und Unterschale aus Kunststoff bestehen, kann das Problem auftreten, dass eine statische Aufladung des Reifens nur schwer abgeführt werden kann. Hierbei kann vorgesehen sein, dass ein metallischer Gürtel des Vollgummireifens elektrisch mit wenigstens einer Schraube verbunden ist, welche Ober- und Unterschale verbindet, wobei die Schraube elektrisch mit der Felge des Fahrzeugrades verbunden ist. Eine derartige Anbindung des Gürtels über die Schraube an die Felge können auf denkbar einfache Weise erfolgen, beispielsweise, indem ein Draht mit dem Gürtel und einem metallischen Druckkörper der Schraube verbunden ist, wobei die Schraube über eine Unterlegscheibe oder einen weiteren Draht mit der Felge verbunden sein kann.

In einer weiteren vorteilhaften Ausgestaltung der Erfindung kann vorgesehen sein, dass der Vollgummireifen auf die aus Segmenten bestehende Oberschale aufvulkanisiert ist. Alternativ kann vorgesehen sein, dass der Vollgummireifen ein separates Bauteil ist, das durch das Verspannen von Oberschale mit Unterschale mit diesen verbunden wird, wobei im verspannten Zustand eine axial äußere und obere Kante der Unterschale mit einer axial äußeren und oberen Kante der Oberschale fluchtet.

Weitere Vorteile und Ausgestaltungen der Erfindung werden anhand der Zeichnungen und der Patentansprüche näher erläutert. Die Zeichnung zeigt, jeweils maßstabsgerecht:
- Fig. 1: ein Ausführungsbeispiel eines erfindungsgemäßen Fahrzeugrades in perspektivischer Ansicht,
- Fig. 2: ein Detail aus Figur 1 in perspektivischer Ansicht,
- Fig. 3: eine Oberschale eines Fahrzeugrades aus den Figuren 1 und 2 von der Seite,
- Fig. 4a - 4g: einen Druckkörper einer Oberschale aus Figur 3 in verschiedenen Ansichten,
- Fig. 5a, 5b: perspektivische Ansichten von zwei Segmenten der Oberschale des Fahrzeugrades aus Figur 1,
- Fig. 6a, 6b: perspektivische Ansichten von zwei Unterschalensegmenten in alternativer Ausgestaltung,
- Fig. 7: eine perspektivische Teilschnittansicht einer weiteren Ausgestaltungsform eines Fahrzeugrades,
- Fig. 8: ein Radialschnitt durch eine weitere Ausgestaltungsform eines erfindungsgemäßen Fahrzeugrades und
- Fig. 9: ein Radialschnitt durch eine weitere Ausgestaltungsform eines erfindungsgemäßen Fahrzeugrades.

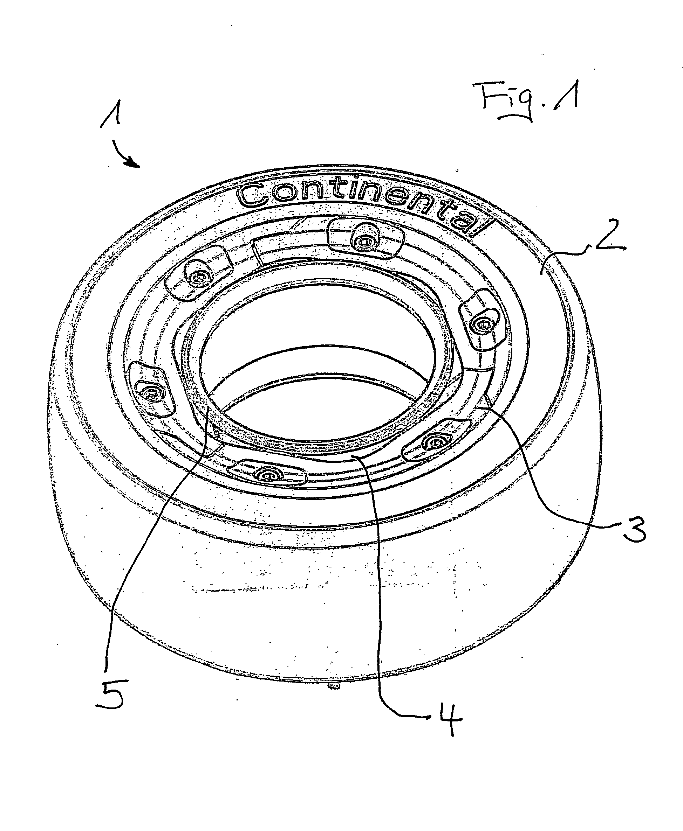

In Figur 1 ist ein erstes Ausführungsbeispiel eines erfindungsgemäßen Fahrzeugrades 1 in perspektivischer Ansicht dargestellt. Das Fahrzeugrad 1, das bevorzugterweise für Gabelstapler, Erdbewegungsmaschinen, Schwerlasttransporte oder ähnliche langsam fahrende Fahrzeuge mit hoher Achslast Verwendung findet, besteht aus einem Vollgummireifen 2, welcher durch eine Oberschale 3 und einer Unterschale 4 mit einer Felge 5 verbunden ist.

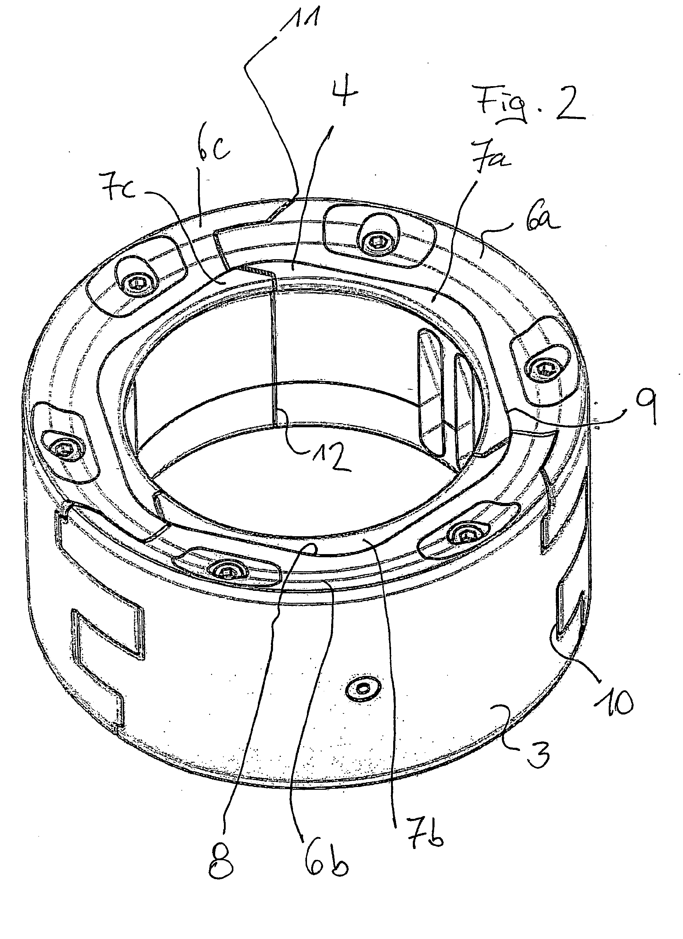

Der Verbund aus Oberschale 3 und Unterschale 4 ist in Figur 2 in perspektivischer Ansicht näher dargestellt. Die Oberschale 3 besteht aus drei Segmenten 6a, 6b und 6c; die Unterschale 4 besteht ebenfalls aus drei Segmenten 7a, 7b und 7c. Die Segmente 6a bis 6c der Oberschale 3 sind mit den Segmenten 7a bis 7c der Unterschale 4 formschlüssig dadurch verbunden, dass die radial innere Kontur 8 der Oberschale 3, sowie die radial äußere Kontur 9 der Unterschale 4 die Form eines Polygons aufweisen. Die Segmente 6a und 6b der Oberschale 3 weisen eine Verzahnung 10 auf, welche der axialen Verriegelung der Segmente 6a und 6b dient. Diese Verriegelung hat sich als praktisch herausgestellt, insbesondere dann, wenn Oberschale 3 und Unterschale 4 nicht überkreuzt miteinander verspannt werden. Die Verzahnung hilft dabei, dass die Segmente nicht axial auseinander driften können, so dass dann die Gefahr bestünde, dass ein aufvulkanisierter Vollgummireifen 2 von der Oberschale abgelöst wird.

Zwischen den Segmenten ist, was insbesondere gut zwischen den Segmenten 6c und 6a zu erkennen ist, eine Dehnfuge 11 angeordnet; entsprechend ist zwischen den Segmenten 7c und 7a der Unterschale 4 ebenfalls eine Dehnfuge 12 angeordnet. Die Dehnfugen 11 und 12 dienen zum Ausgleich von Wärmeausdehnungen bei Erwärmung des Fahrzeugrades während des Betriebes bzw. während hoher Außentemperaturen. Durch die Ausgestaltung der Dehfugen 11 und 12 der in den Figuren 1 und 2 dargestellten Konfiguration ist ein Zusammenhalt von Unterschale 4 und Oberschale 3 unter den verschiedensten Temperaturbedinungen gewährleistet.

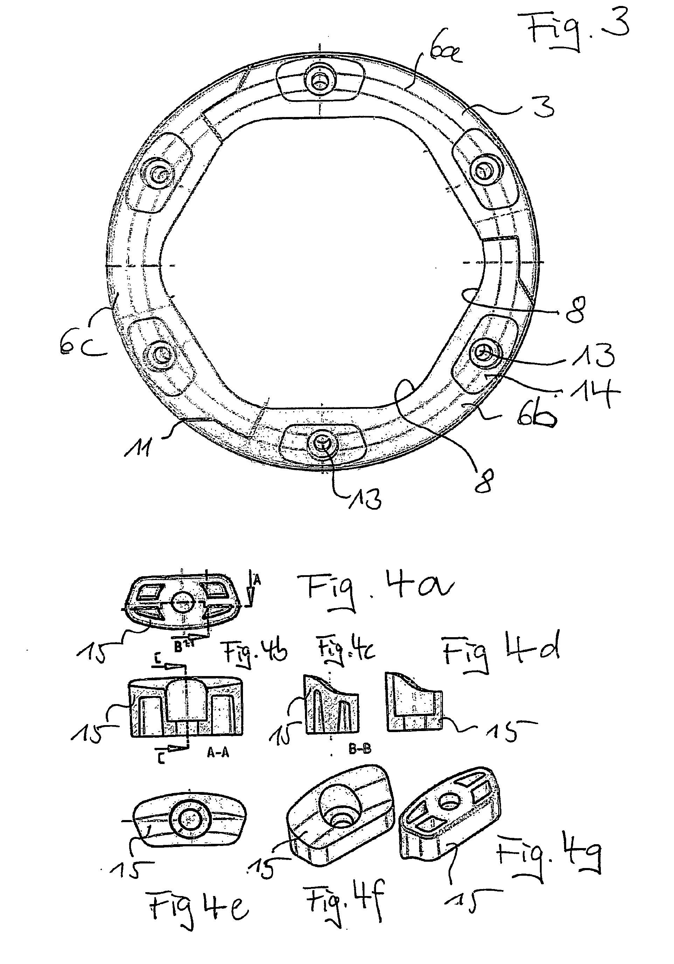

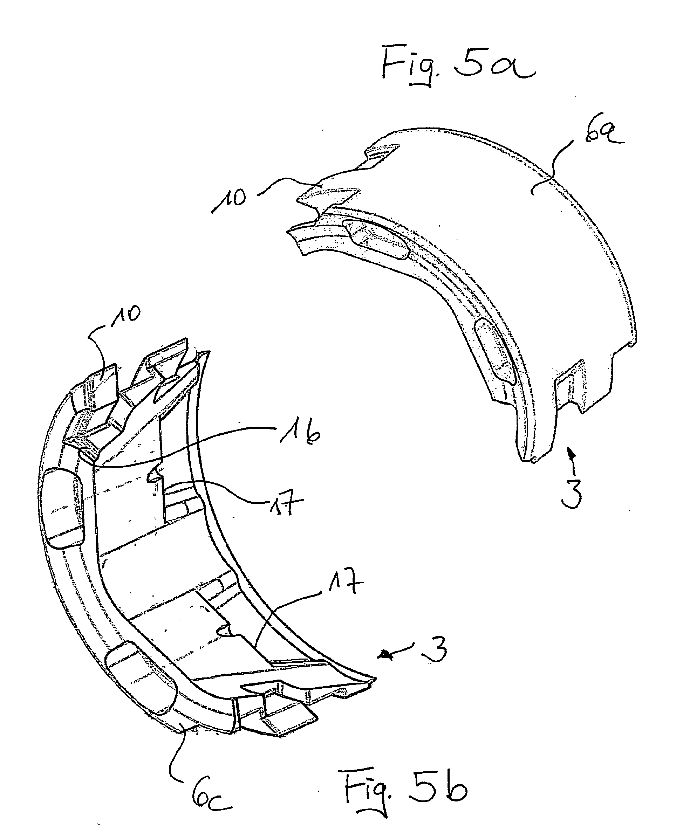

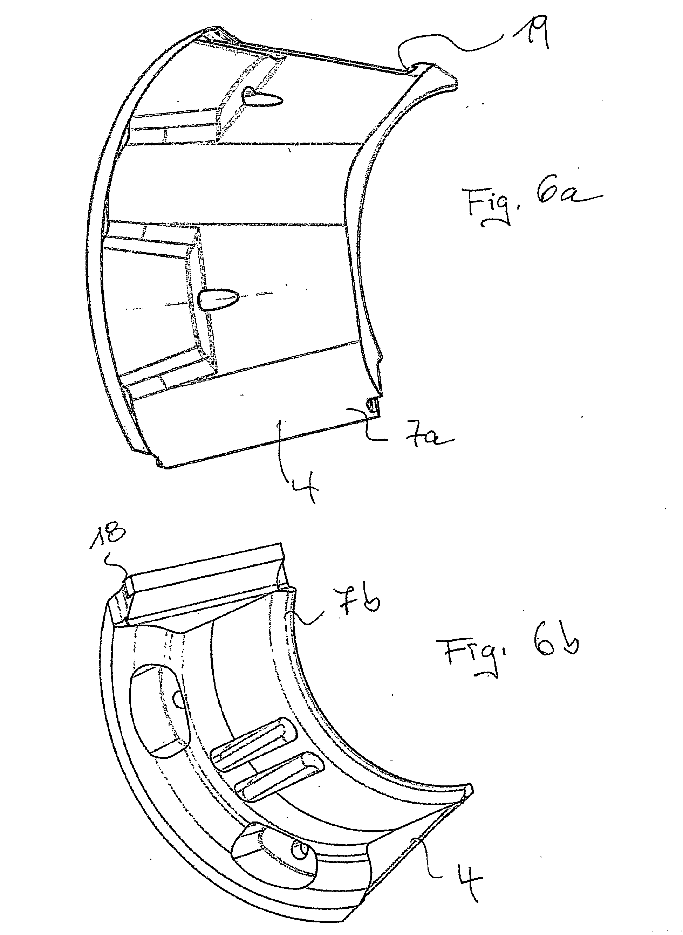

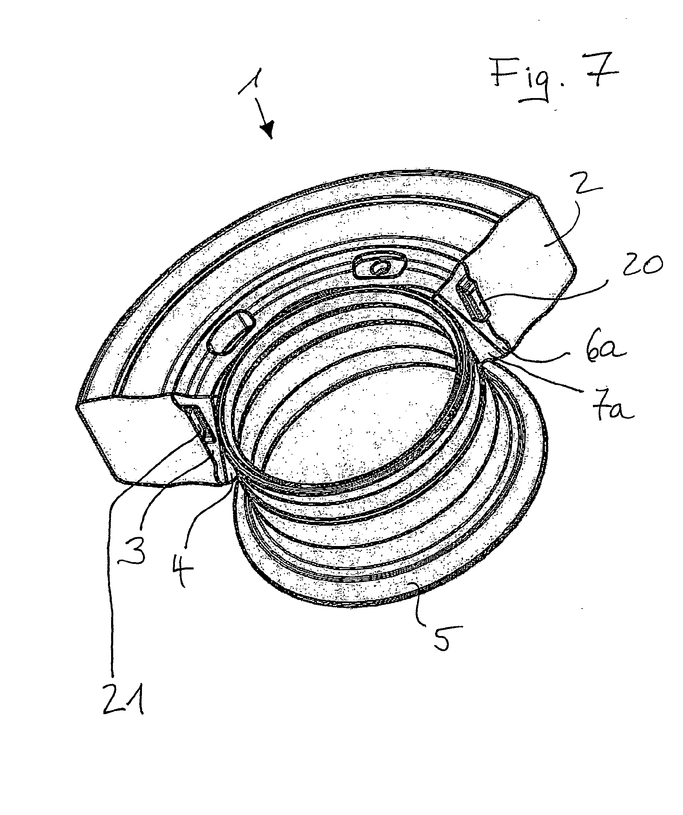

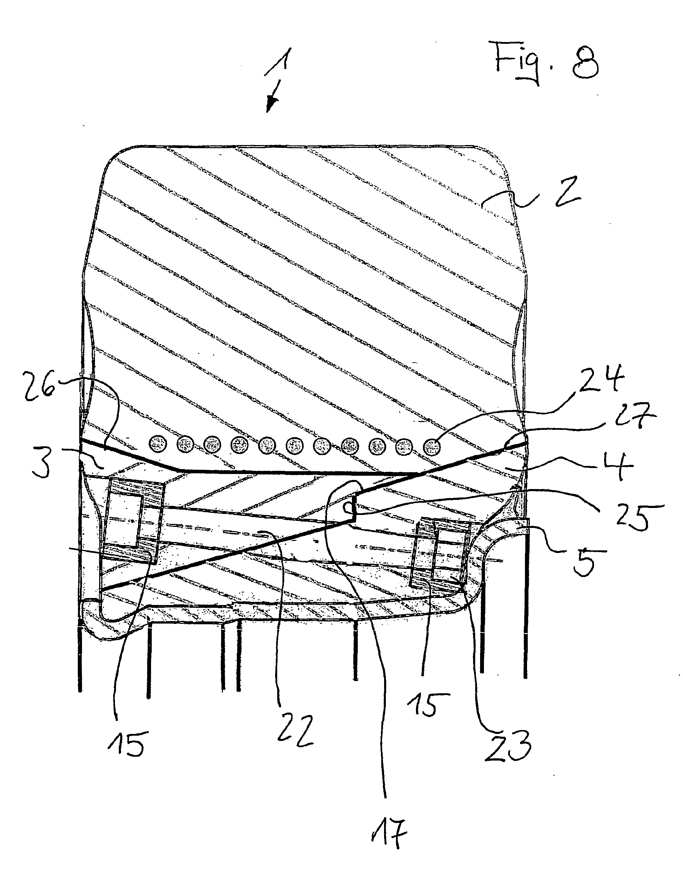

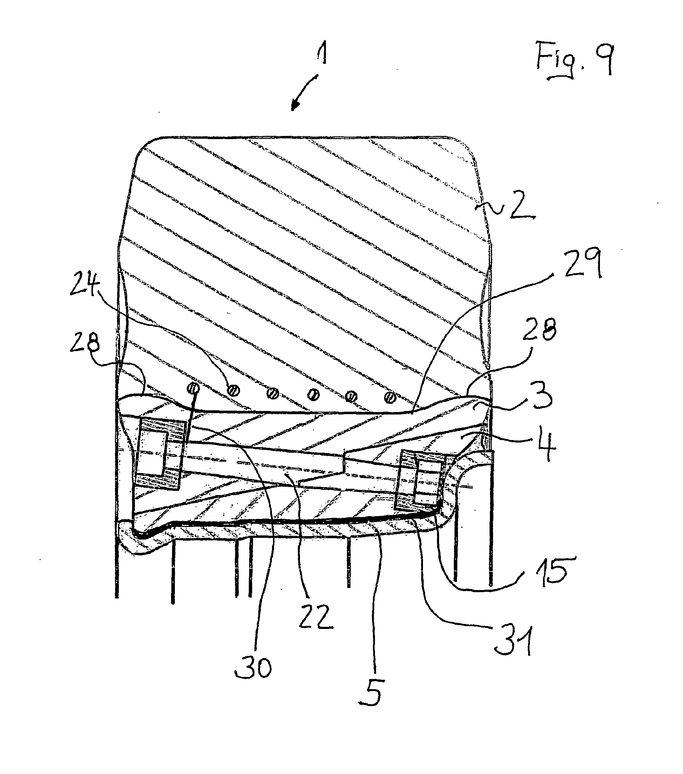

In Figur 3 ist die Oberschale 3 aus Figur 2 von der Seite dargestellt. Zu erkennen sind hier insbesondere die als Polygon ausgestaltete innere Kontur 8, die Dehnfuge 11 sowie Bohrungen 13, in welche Schrauben zum Verspannen gegen die Unterschale 4 eingeführt werden können. Um die Bohrungen 13 sind jeweils Ausnehmungen 14 eingelassen, in welche Druckkörper 15 eingesetzt werden. Die Druckkörper 15 sind in den Figuren 4a bis 4g von unten, von oben, in perspektivischer Ansicht von oben und unten sowie in Schnittdarstellungen selbsterklärend gezeigt. Die Druckkörper 15 können aus metallischen Werkstoffen, insbesondere aus Aluminiumdruckguß oder Zinkdruckguß, oder aus glasfaserverstärktem Kunststoff bestehen, während die Oberschale 3 und die Unterschale 4 jeweils aus Kunststoff, insbesondere aus Polyamid bestehen. Die Druckkörper dienen dazu, den von den Schrauben ausgeübten Druck besser auf Oberschale 3 und Unterschale 4 verteilen zu können.

In den Figuren 5a und 5b sind zwei Segmente 6a und 6c der Oberschale in perspektivischer Ansicht dargestellt. Zu erkennen ist dort insbesondere die Verzahnung 10, sowie eine Schmutzkante 16. Die Schmutzkante 16 dient einem Selbstreinigungszweck insofern, als dass bei Wärmeausdehnung möglicherweise in die Segmenttrennfugen eingedrungener Schmutz wieder herausgepresst werden kann. In Figur 5b ist darüberhinaus eine Anschlagkante 17 zu erkennen, auf die noch einzugehen sein wird.

In den Figuren 6a und Figur 6b sind Segmente 7a der Unterschale 4 dargestellt, welche kongruente Passflächen zu den in den Figuren 5a und 5b dargestellten Segmenten 6a und 6c der Oberschale 3 aufweisen. Das Segment 7b weist ein Rastelement 18 auf, welches mit einem entsprechend geformten Rastelement 19 des Segmentes 7a zusammenwirkt. Dies ermöglicht ein einfaches Zusammensetzen der Segmente 6a und 6b sowie 6c auf der Felge, indem die einzelnen Segmente 6a bis 6c einfach auf ein Kompressionsgummi auf der Felge 5 aufgesetzt und miteinander verrastet werden.

In Figur 7 ist eine Felge 5 dargestellt, auf welche ein Segment 7a der Unterschale 4 und ein Segment 6a der Oberschale 3 aufgesetzt ist, wobei zusätzlich noch ein Teilabschnitt eines Vollgummireifens 2 zu erkennen ist. Ebenso wie die Unterschalen aus den Figuren 6a und 6b ist auch das Segment 6a der Oberschale 3 mit Rastelementen 20, 21 versehen, welche dem einfachen Zusammenfügen der Segmente, sowie der darüber hinaus noch der radialen und axialen Verriegelung dienen.

In Figur 8 ist ein weiteres Ausführungsbeispiel eines erfindungsgemäßen Fahrzeugrades 1 im Radialschnitt dargestellt. Unterschale 4 und Oberschale 3 sind mittels einer Schraube 22 miteinander verspannt, wobei die Schraube 22 in Druckkörpern 15 gelagert ist, wobei eine Mutter 23 in einem Druckstück 15 der Unterschale 4 gelagert ist. Mit 24 soll ein metallischer Gürtel angedeutet sein. Die Anschlagkante 17 der Oberschale 3 stößt an eine entsprechende Anschlagkante 25 der Unterschale 3 an. Eine radial obere und axial äußere Fläche 26 ist so ausgestaltet, dass sie auf gleicher Höhe mit einer radial äußeren und axial inneren Fläche der Unterschale 4 fluchten. Diese Ausgestaltung macht es möglich, einen Vollgummireifen 2 zu verwenden, der nicht mit der Oberschale 3 durch Vulkanisation verbunden ist, sondern als separates Bauteil durch Oberschale 3 und Unterschale 4 auf die Felge gespannt wird und derart Halt findet. Dies macht es möglich, die Oberschale 3 als separates Bauteil zu verwenden, ohne dass es nötig wäre, beim Austausch eines Vollgummireifens 2 die Oberschale 3 einer erneuten Vulkanisation zuzuführen.

Die Figur 9 ist ein weiteres Ausführungsbeispiel eines erfindungsgemäßen Fahrzeugrades in Radialschnitt dargestellt. Das in Figur 9 dargestellte Fahrzeugrad 1 entspricht dabei weitgehend der in Figur 8 dargestellten Ausführungsform, wobei jedoch im Gegensatz zu der in Figur 8 dargestellten Ausführungsform der Vollgummireifen 2 mit der Oberschale 3 fest verbunden ist, und zwar durch Vulkanisation. Um Spannungsrisse bei hohen Auflasten entgegenzuwirken, sind radial obere und axial äußere Bereiche der Oberschale 3 mit einer balligen Schulter 28 versehen, durch welche die radial äußere Kontur der Oberschale 3 insgesamt die Form eines Sattels 29 erhält. Dies wirkt Spannungsrissen, die bei hohen Achslasten auftreten können, entgegen.

Ferner weist der Gürtel 24 eine Verbindung 30 zur Schraube 22 auf, wobei diese Verbindung 30 zur Schraube 22 der Ableitung elektrostatischer Ableitungen, Widerstand < 10^6 Ohm, über die Felge 5 dient. Sollte die Schraube nicht über das Druckstück 15 Verbindung zur Felge aufweisen, kann ferner eine entsprechende Verbindung von Schraube zur Felge 5 vorgesehen sein. Bestehen Oberschale 3 und Unterschale 4 aus Kunststoff, wie Polyamid, kann die Ableitung statischer Aufladungen auch daduch erfolgen, dass dem Kunststoff elektrisch leitfähiger Ruß beigemischt wird.

In Figur 9 ist schließlich noch kurz das an sich bekannte Kompressionsgummi 31 zu erkennen, mit dem bevorzugter Weise eine kraftschlüssige Verbindung von Unterschale 4 mit Felge 5 bewerkstelligt wird.

### Bezugszeichenliste

### (Teil der Beschreibung)

- 1: Fahrzeugrad
- 2: Vollgummireifen
- 3: Oberschale
- 4: Unterschale
- 5: Felge
- 6a, 6b, 6c: Segmente
- 7a, 7b, 7c: Segmente
- 8: radial innere Kontur
- 9: radial äußere Kontur
- 10: Verzahnung
- 11: Dehnfuge
- 12: Dehnfuge
- 13: Bohrung
- 14: Ausnehmung
- 15: Druckkörper
- 16: Schmutzkante
- 17: Anschlagkante
- 18: Rastelement
- 19: Rastelement
- 20: Rastelement
- 21: Rastelement
- 22: Schraube
- 23: Mutter
- 24: Gürtel
- 25: Anschlagkante
- 26: Fläche
- 27: Fläche
- 28: Schulter
- 29: Sattel
- 30: Verbindung
- 31: Kompressionsgummi

## Patentansprüche

1. Fahrzeugrad mit einer Felge (5) und mit einem auf der Felge (5) positionierten Vollgummireifen (2), wobei auf der Felge (5) eine aus Segmenten (7a, 7b, 7c) zusammengesetzte, am äußeren Umfang eine Keilfläche aufweisende ringförmige Unterschale (4) angeordnet ist, die gegen eine eine gegengleich ausgeführte Keilfläche aufweisende ringförmige Oberschale (3), die mit dem Vollgummireifen verbunden ist, verspannt ist,
**dadurch gekennzeichnet, dass**
die Oberschale (3) aus wenigstens zwei, vorzugsweise aus drei bis fünf Segmenten (6a, 6b, 6c) zusammengesetzt ist.

2. Fahrzeugreifen nach Anspruch 1, **dadurch gekennzeichnet, dass** Oberschale (3) und Unterschale (4) Anschlagkanten (17, 25) aufweisen.

3. Fahrzeugrad nach Anspruch 1, **dadurch gekennzeichnet, dass** wenigstens eine Distanzhülse an definierten Anschlag zwischen Oberschale (3) und Unterschale (4) darstellt.

4. Fahrzeugrad nach einem der vorangegangenen Ansprüche, **dadurch gekennzeichnet, dass** wenigstens die Segmente (6a, 6b, 6c) der Oberschale (3) eine Verzahnung (10) aufweisen.

5. Fahrzeugrad nach einem der vorangegangenen Ansprüche, **dadurch gekennzeichnet, dass** zwischen den Segmenten (6a, 6b, 6c; 7a, 7b, 7c) der Oberschale (3) und der Unterschale (4) jeweils eine Dehnfuge (11; 12) besteht.

6. Fahrzeugrad nach einem der vorangegangenen Ansprüche, **dadurch gekennzeichnet, dass** im Bereich der Verzahnung (10) der Segmente (6a, 6b, 6c) der Oberschale wenigstens eine Schmutzkante (16) angeordnet ist.

7. Fahrzeugrad nach wenigstens einem der vorangegangenen Ansprüche, **dadurch gekennzeichnet, dass** Stirnseiten der Segmente (6a, 6b, 6c; 7a, 7b, 7c) Rastelemente (18, 19, 20, 21) aufweisen, durch welche die Segmente der Oberschale (3) bzw. der Unterschale (4) jeweils verbindbar sind.

8. Fahrzeugrad nach wenigstens einem der vorangegangenen Ansprüche, **dadurch gekennzeichnet, dass** eine radial äußere Kontur der Oberschale (3) die Form eines Sattels (29) mit zwei balligen Schultern (28) aufweist.

9. Fahrzeugrad nach wenigstens einem der vorangegangenen Ansprüche, **dadurch gekennzeichnet, dass** Oberschale (3) und Unterschale (4) formschlüssig miteinander **dadurch** verbunden sind, dass eine radial äußere Kontur der Unterschale (4) und eine radial innere Kontur (8) der Oberschale (3) zusammen einen Polygon bilden.

10. Fahrzeugrad nach wenigstens einem der vorangegangenen Ansprüche, **dadurch gekennzeichnet, dass** Unterschale (4) und Oberschale (3) durch eine Verzahnung miteinander formschlüssig verbunden sind.

11. Fahrzeugrad nach wenigstens einem der vorangegangenen Ansprüche, **dadurch gekennzeichnet, dass** wenigstens der Gürtel (24) des Vollgummireifens (2) elektrisch mit der Felge (5) verbunden ist.

## Claims

1. Vehicle wheel comprising a rim (5) and a solid rubber tire (2) positioned on the rim (5), an annular lower shell (4) which is made up of segments (7a, 7b, 7c) and has a wedge-like surface on the external periphery being arranged on the rim (5) and braced against an annular upper shell (3) which has a diametrically opposed wedge-like surface and is connected to the solid rubber tire, **characterized in that** the upper shell (3) is made up of at least two, preferably three to five, segments (6a, 6b, 6c).

2. Vehicle wheel according to Claim 1, **characterized in that** the upper shell (3) and the lower shell (4) have stop edges (17, 25).

3. Vehicle wheel according to Claim 1, **characterized in that** at least one distance sleeve represents a defined stop between the upper shell (3) and the lower shell (4).

4. Vehicle wheel according to one of the preceding claims, **characterized in that** at least the segments (6a, 6b, 6c) of the upper shell (3) have an interlocking formation (10).

5. Vehicle wheel according to one of the preceding claims, **characterized in that** there is an expansion joint (11; 12) respectively between the segments (6a, 6b, 6c; 7a, 7b, 7c) of the upper shell (3) and of the lower shell (4).

6. Vehicle wheel according to one of the preceding claims, **characterized in that** at least one dirt edge (16) is arranged in the region of the interlocking formation (10) of the segments (6a, 6b, 6c) of the upper shell.

7. Vehicle wheel according to at least one of the preceding claims, **characterized in that** end faces of the segments (6a, 6b, 6c; 7a, 7b, 7c) have latching elements (18, 19, 20, 21), by which the segments of the upper shell (3) or of the lower shell (4) can be respectively connected.

8. Vehicle wheel according to at least one of the preceding claims, **characterized in that** a radially outer contour of the upper shell (3) has the form of a saddle (29) with two convex shoulders (28).

9. Vehicle wheel according to at least one of the preceding claims, **characterized in that** the upper shell (3) and the lower shell (4) are positively connected to each other by a radially outer contour of the lower shell (4) and a radially inner contour (8) of the upper shell (3) together forming a polygon.

10. Vehicle wheel according to at least one of the preceding claims, **characterized in that** the lower shell (4) and the upper shell (3) are positively connected to each other by an interlocking formation.

11. Vehicle wheel according to at least one of the preceding claims, **characterized in that** at least the breaker belt (24) of the solid rubber tire (2) is electrically connected to the rim (5).

## Revendications

1. Roue de véhicule comprenant une jante (5) et un pneu plein (2) logé sur la jante (5), une coque inférieure annulaire (4), composée de segments (7a, 7b, 7c), présentant une surface cunéiforme sur la périphérie extérieure, étant disposée sur la jante (5), ladite coque inférieure étant serrée contre une coque supérieure annulaire (3), présentant une surface cunéiforme diamétralement opposée, qui est connectée au pneu plein,
**caractérisée en ce que**
la coque supérieure (3) est composée d'au moins deux, de préférence de trois à cinq, segments (6a, 6b, 6c).

2. Roue de véhicule selon la revendication 1, **caractérisée en ce que** la coque supérieure (3) et la coque inférieure (4) présentent des arêtes de butée (17, 25).

3. Roue de véhicule selon la revendication 1, **caractérisée en ce qu'**au moins une douille d'espacement constitue une butée définie entre la coque supérieure (3) et la coque inférieure (4).

4. Roue de véhicule selon l'une quelconque des revendications précédentes, **caractérisée en ce qu'**au moins les segments (6a, 6b, 6c) de la coque supérieure (3) présentent une denture (10).

5. Roue de véhicule selon l'une quelconque des revendications précédentes, **caractérisée en ce qu'**entre les segments (6a, 6b, 6c ; 7a, 7b, 7c) de la coque supérieure (3) et de la coque inférieure (4) est réalisé un joint de dilatation respectif (11 ; 12).

6. Roue de véhicule selon l'une quelconque des revendications précédentes, **caractérisée en ce que** dans la région de la denture (10) des segments (6a, 6b, 6c) de la coque supérieure, est disposée au moins une arête antipoussière (16).

7. Roue de véhicule selon l'une quelconque des revendications précédentes, **caractérisée en ce que** des côtés frontaux des segments (6a, 6b, 6c ; 7a, 7b, 7c) présentent des éléments d'encliquetage (18, 19, 20, 21) qui permettent à chaque fois de connecter les segments de la coque supérieure (3) ou de la coque inférieure (4).

8. Roue de véhicule selon l'une quelconque des revendications précédentes, **caractérisée en ce qu'**un contour radialement extérieur de la coque supérieure (3) présente la forme d'une selle (29) avec deux épaulements bombés (28).

9. Roue de véhicule selon l'une quelconque des revendications précédentes, **caractérisée en ce que** la coque supérieure (3) et la coque inférieure (4) sont connectées l'une à l'autre par engagement par coopération de forme de telle sorte qu'un contour radialement extérieur de la coque inférieure (4) et un contour radialement intérieur (8) de la coque supérieure (3) forment conjointement un polygone.

10. Roue de véhicule selon l'une quelconque des revendications précédentes, **caractérisée en ce que** la coque inférieure (4) et la coque supérieure (3) sont connectées l'une à l'autre par engagement par coopération de forme par une denture.

11. Roue de véhicule selon l'une quelconque des revendications précédentes, **caractérisée en ce qu'**au moins la ceinture (24) du pneu plein (2) est connectée électriquement à la jante (5).
